# EUROPEAN PATENT SPECIFICATION

(11) **EP 3 024 209 B1**
(45) Date of publication and mention of the grant of the patent: **23.02.2022**
(21) Application number: 15194989.8
(22) Date of filing: 17.11.2015
(51) Int. Cl.: H04M 3/38, G06Q 10/10, H04M 3/436

(54) **MANAGING COMMUNICATION EXPLOITATION IN GLOBAL ORGANIZATIONS**
VERWALTUNG DER KOMMUNIKATIONSVERWERTUNG IN INTERNATIONALEN ORGANISATIONEN
GESTION DE L'EXPLOITATION DE LA COMMUNICATION DANS DES ORGANISATIONS GLOBALES

(30) Priority: 18.11.2014 US 201414546669
(43) Date of publication of application: 25.05.2016
(73) Proprietor: Nagravision S.A., 1033 Cheseaux-sur-Lausanne (CH)
(72) Inventor: Morten, Glenn, CH-1033 Cheseaux-sur-Lausanne (CH)
(74) Representative: Creation IP Ltd

(56) References cited:
- US-A1- 2002 186 827
- US-A1- 2010 046 731
- US-A1- 2013 003 954
- US-A1- 2013 275 516
- US-A1- 2014 004 832
- US-B1- 7 251 696
- US-B1- 7 330 895

## Description

### TECHNICAL FIELD

The present invention relates generally to managing global employee communications and, more particularly, but not exclusively to restricting delivery of work related communications to employees to within their work hours in a manner that protects from exploitation, while monitoring for compliance with any overrides to the restrictions.

### BACKGROUND

Mobile phones, smart phones, portable tablets, laptops, and desktops, all of these devices allow us to stay connected by voice, text messages, sending of documents, emails, and so forth. We can start a conversation using our desktop, and readily move to our portable computing device, to continue the conversation as we leave our desks. While such devices are used to stay connected to our friends and family, many of us use them to also stay connected with our work. It is common to leave our workplace and continue to do work using our computing devices even after the end of our defined work schedule. For many people, our work life has crept into the rest of our life. In fact, many of us feel compelled to maintain workplace communications even after our regularly scheduled work time. There is an overwhelming belief that we may miss out on important information if we are not constantly checking our work. Many of us therefore often go home, sign onto our desktop computers and continue to do work. We may often use our portable computing devices for work related activities during our commute, while at dinner, at a social event, or even before going to bed. Such constant need to 'stay connected' may be even more apparent for employees of global companies with locations and employees in different time zones.

Employers have also become aware of the advantages of 'staying connected' off-hours with their employees. The advantages become even more apparent to employers that have a global presence. These advantages have prompted many businesses, both global and regional, to provide their employees with portable computing devices, so that employer and employee can remain connected no matter what the time of day may be, or where the employee/employer may be located.

While, all of this continued communications may provide significant advantages, it is also creating significant stress on our daily life. Often, the employee may feel that they must respond to their employers off-hour communications, or risk their job. Employers may believe that providing their employees with portable computing devices provide them with the right to off-hour communications.

However, many companies, and government organizations are recognizing that the stress related to 'staying connected' is creating physiological and/or physical disorders for their employees. In recognizing that it is in the interests of employers that employees can reliably switch off from their jobs to avoid "burn out," the German Labor Ministry recently mandated a ban regarding calling or emailing employees out of hours, except in emergencies. Further, the Labor Minister called on companies to set clear rules over the out-of hours availability of their workers, warning that; "technology should not be allowed to control us and dominate our lives. We should control technology."

While, such goals are desirable, compliance with these requirements for many companies may be extremely complex and expensive, especially for small businesses with employees in many areas of the globe. Such compliance may be even more complicated where the employees are mobile, traveling across time zones as part of their work. Therefore, it is with respect to these considerations and others that the present invention has been made.

US2013/0275516 discloses a method and apparatus for controlling communications to allow a recipient of electronic communications to be designated as in a no-contact state based on a recipient profile but to allow a sender to designate emergency communications for sending to the recipient.

### SUMMARY

The present invention provides a network device and a method executed within a network device as defined in the appended claims.

### BRIEF DESCRIPTION OF THE DRAWINGS

Non-limiting and non- exhaustive embodiments are described with reference to the following drawings. In the drawings, like reference numerals refer to like parts throughout the various figures unless otherwise specified.

For a better understanding, reference will be made to the following Detailed Description, which is to be read in association with the accompanying drawings, wherein:
FIGURE 1 is a system diagram of one embodiment of an environment in which the techniques may be practiced; and
FIGURE 2 shows one embodiment of a flow diagram of a process that manages communications to minimize recipient exploitation.

### DETAILED DESCRIPTION

The present techniques now will be described more fully hereinafter with reference to the accompanying drawings, which form a part hereof, and which show, by way of illustration, specific embodiments by which the invention may be practiced. This invention may, however, be embodied in many different forms and should not be construed as limited to the embodiments set forth herein; rather, these embodiments are provided so that this disclosure will be thorough and complete, and will fully convey the scope of the invention to those skilled in the art. Among other things, the present invention may be embodied as methods or devices. Accordingly, the present invention may take the form of an entirely hardware embodiment, or an embodiment combining software and hardware aspects. The following detailed description is, therefore, not to be taken in a limiting sense.

Throughout the specification and claims, the following terms take the meanings explicitly associated herein, unless the context clearly dictates otherwise. The various occurrences of the phrase "in one embodiment" as used herein do not necessarily refer to the same embodiment, though they may. As used herein, the term "or" is an inclusive "or" operator, and is equivalent to the term "and/or," unless the context clearly dictates otherwise. The term "based on" is not exclusive and allows for being based on additional factors not described, unless the context clearly dictates otherwise. In addition, throughout the specification, the meaning of "a," "an," and "the" include plural references. The meaning of "in" includes "in" and "on."

As used herein, the term "employer" refers to any representative of a business operating on behalf of the business, and authorized by the business to manage one or more employees of the business. Thus, an employer herein includes a lead, supervisor, manager, department head, and so forth, within the business, where each position is empowered by the business to direct work of an employee. Further, as used herein, the term "employee" refers to any individual (or individuals) that provides services to the business for compensation, and whose work related actions are directed at least in part by the employer. As defined therefore, at various times, an employee may also act an employer, such as in the case of a chain of managers. For example, a lead might operate as an employee with respect to a supervisor, which acts as an employer to the lead, while acting as an employee to an upper level manager. In each instance, however, the employer is obligated to comply with the work hour restrictions unless an override restriction is allowed. Such override restrictions may include any of a variety of conditions, including, but not limited to a physical emergency, a business related emergency, a medical emergency, or the like. The definition of an emergency may be defined and therefore explained, in some embodiments, by the employer/sender of the communications.

Further, as used herein, the term "business" refers to any entity having one or more individuals, or other entities providing goods or services for compensation. Thus, as used herein, a business includes, private businesses, publicly owned businesses, governmental organizations, religious organizations, educational organizations, as a non-limiting, non-exhaustive list of examples.

The following briefly describes the embodiments in order to provide a basic understanding of some aspects of the techniques. This brief description is not intended as an extensive overview. It is not intended to identify key or critical elements, or to delineate or otherwise narrow the scope. Its purpose is merely to present some concepts in a simplified form as a prelude to the more detailed description that is presented later.

Briefly stated, embodiments are disclosed herein that integrate communication mechanisms of a business with time management/calendar systems having knowledge of an employee's work schedule and geo-location, with a set of rules usable to selectively store and/or forward work related communications to an employee, while enabling overrides for emergencies, preventing employee self-exploitation, and monitoring for compliance. When a work related communications is sent to an employee, the system receives the communication, and evaluates the communication based on the employee's work schedule, geo-location, and any other restrictions within the set of rules. When it is determined that the communications should be restricted from being sent, and no override to the restrictions is identified, then the communication is scheduled for transmission to the employee at a later time. Overrides to the restrictions are logged and monitored for compliance to company policy. In some embodiments, feedback may be sent to the employer, sending the communication, explaining that the transmission of the communication to the employee is rescheduled for a later time due to a work time restriction.

By intercepting a work related communications and scheduling the communications to be sent to the employee during their scheduled work hours, the employer need not consider the work hours of the employee, while remaining respectful of the employee work/life balance and further being compliant with company policy or other mandates. This may be particularly beneficial where the employer's communication is directed to a plurality of employees, where at least one of the employee's work hours is different from another one of the employees in the plurality.

Further, the system may be configured to prevent the employee from overriding their work hours, or other communication constraints, thereby allowing them to 'unplug' without fear of retribution.

Any of a variety of communications mechanisms usable to communicate with the employee may be considered for holding and rescheduling of transmissions. For example, in some embodiments, an employer may place a voice phone call to an employee. The call may be redirected to the system for evaluation. When it is determined that a restriction exists, and absent overrides to the restrictions, the employer may be directed to record a message. The message may then be held and rescheduled to be sent to the employee when the restrictions are no longer satisfied.

It is further noted that while the subject innovations disclosed herein are applicable to an employer/employee communications, the innovations are not so constrained. Thus, contact labor, work for hire labor, or so forth, might also used the innovations. Similarly, communications might be delayed based on other restrictions besides work schedules. Thus, for example, a family might employ the subject innovations to prevent communications from a parent to their children, when the children are in school or other scheduled activity, except for emergencies. Communications may also be rescheduled from children to parents when the parent is at work, except in an emergency. Thus, it should be recognized that the subject innovations are applicable to other situations in addition to a workplace environment.

### Illustrative Operating Environment

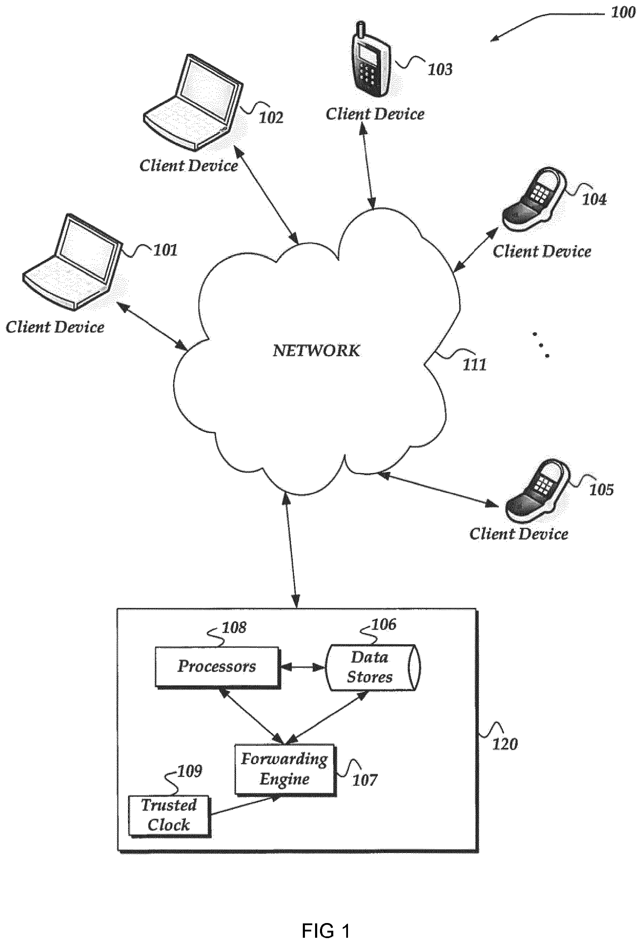

FIGURE 1 shows components of one embodiment of an environment in which the invention may be practiced. Not all the components may be required to practice the invention, and variations in the arrangement and type of the components may be made without departing from the subject innovations.

As shown, system 100 of FIGURE 1 includes network 111, client devices 101-105, and Communications Compliance (CC) device 120.

Client devices 101-105 may include virtually any computing device capable of receiving and sending a communications over a network, such as network 111. Such devices include wireless devices such as, cellular telephones, smart phones, display pagers, radio frequency (RF) devices, infrared (IR) devices, Personal Digital Assistants (PDAs), handheld computers, laptop computers, wearable computers, tablet computers, integrated devices combining one or more of the preceding devices, or the like. Client devices 101-105 may also include virtually any computing device that typically connects using a wired communications medium such as telephones, televisions, video recorders, cable boxes, gaming consoles, personal computers, multiprocessor systems, microprocessor-based or programmable consumer electronics, network PCs, smart watches, or the like. Thus, one or more of client devices 101-105 may be configured to operate over a wired and/or a wireless network.

Client devices 101-105 typically range widely in terms of capabilities and features. For example, a cell phone may have a numeric keypad and a few lines of monochrome LCD display on which only text may be displayed. In another example, a web-enabled client device may have a touch sensitive screen, a stylus, and several lines of color display in which both text and graphics may be displayed. Other client devices 101-105 may send and/or receive audio, text, graphics, videos, or virtually any other form or format of communications.

A web-enabled client device may include a browser application that is configured to receive and to send web pages, web-based messages, or the like. The browser application may be configured to receive and display graphics, text, multimedia, or the like, employing virtually any web-based language, including a wireless application protocol messages (WAP), or the like. In one embodiment, the browser application is enabled to employ Handheld Device Markup Language (HDML), Wireless Markup Language (WML), WMLScript, JavaScript, Standard Generalized Markup Language (SMGL), HyperText Markup Language (HTML), extensible Markup Language (XML), or the like, to display and send information.

Client devices 101-105 also may include at least one other client application that is configured to receive information and other data from another computing device. The client application may include a capability to provide and receive textual content, multimedia information, or the like. The client application may further provide information that identifies itself, including a type, capability, name, or the like. In one embodiment, client devices 101-105 may uniquely identify themselves through any of a variety of mechanisms, including a phone number, Mobile Identification Number (MIN), an electronic serial number (ESN), mobile device identifier, network address, or other identifier. The identifier may be provided in a message, or the like, sent to another computing device.

In one embodiment, client devices 101-105 may further provide information useable to detect a location of the client device. Such location may sometimes be referred to as a geo-location, indicating a physical location of the client device. Such information may be provided in a message, or sent as a separate message to another computing device.

Client devices 101-105 may also be configured to communicate a message, such as through email, Short Message Service (SMS), Multimedia Message Service (MMS), instant messaging (IM), internet relay chat (IRC), Mardam-Bey's IRC (miRC), Jabber, or the like, between another computing device. However, the present invention is not limited to these message protocols, and virtually any other message protocol may be employed.

Client devices 101-105 may further be configured to include a client application that enables the user to log into a user account that may be managed by another computing device. Information provided either as part of a user account generation, interacting with the other computing device, or other activity may result in providing various profile information. Such profile information may include, but is not limited to user information, usage history, geo-location, or the like.

Further, one or more of client device 101-105 may include a component that can determine the physical coordinates of the client device on the surface of the Earth, which typically outputs a location as latitude and longitude values. The component can also employ other geo-positioning mechanisms, including, but not limited to, triangulation, assisted GPS (AGPS), E-OTD, CI, SAI, ETA, BSS or the like, to further determine the physical location of the client device on the surface of the Earth. It is understood that under different conditions, the component can determine a physical location within millimeters for the client device; and in other cases, the determined physical location may be less precise, such as within a meter or significantly greater distances. In one embodiment, however, a client device may through other components, provide other information that may be employed to determine a physical location of the device, including for example, a MAC address, IP address, or the like.

In any event, it should be recognized that any one or more of client devices 101-105 may be used by an employer, while one or more of the other client devices 101-105 may be used by an employee. For example, client device 101 might be employed by an employer to send a communications to an employee that might employ client device 105. In some instances, the employee to whom the communications is directed may also be herein referred to as a "recipient" of the communication, whether or not the communication is ever actually received by the employee.

Continuing to describe system 100, network 111 is configured to couple client devices 101-105 with each other, as well as with CC device 120. Network 111 may include any of a variety of wireless sub-networks that may further overlay stand-alone ad-hoc networks, or the like, to provide an infrastructure-oriented connection for client devices 101-105. Such sub-networks may include mesh networks, Wireless LAN (WLAN) networks, cellular networks, or the like.

Network 111 may further include an autonomous system of terminals, gateways, routers, or the like connected by wireless radio links, or the like. These connectors may be configured to move freely and randomly and organize themselves arbitrarily, such that the topology of network 111 may change rapidly.

Network 111 may further employ a plurality of access technologies including 2nd (2G), 3rd (3G), 4th (4G) generation radio access for cellular systems, WLAN, Wireless Router (WR) mesh, or the like. Access technologies such as 2G, 2.5G, 3G, 4G, and future access networks may enable wide area coverage for client devices, such as client devices 101-105 with various degrees of mobility. For example, network 111 may enable a radio connection through a radio network access such as Global System for Mobile communication (GSM), General Packet Radio Services (GPRS), Enhanced Data GSM Environment (EDGE), Wideband Code Division Multiple Access (WCDMA), Bluetooth, or the like. In essence, network 111 may include virtually any wireless communication mechanism by which information may travel between client devices 101-105, CC device 120, and/or another computing device, network, or the like.

Also, network 111 can include the Internet in addition to local area networks (LANs), wide area networks (WANs), direct connections, such as through a universal serial bus (USB) port, other forms of computer-readable media, or any combination thereof. On an interconnected set of LANs, including those based on differing architectures and protocols, a router may act as a link between LANs, enabling messages to be sent from one to another. In addition, communication links within LANs typically include twisted wire pair or coaxial cable, while communication links between networks may utilize analog telephone lines, full or fractional dedicated digital lines including T1, T2, T3, and T4, Integrated Services Digital Networks (ISDNs), Digital Subscriber Lines (DSLs), wireless links including satellite links, or other communications links known to those skilled in the art. Furthermore, remote computers and other related electronic devices could be remotely connected to either LANs or WANs via a modem and temporary telephone link. Further, network 111 may include a wholly private network, a wholly public network, or even a combination of private and public sub-networks.

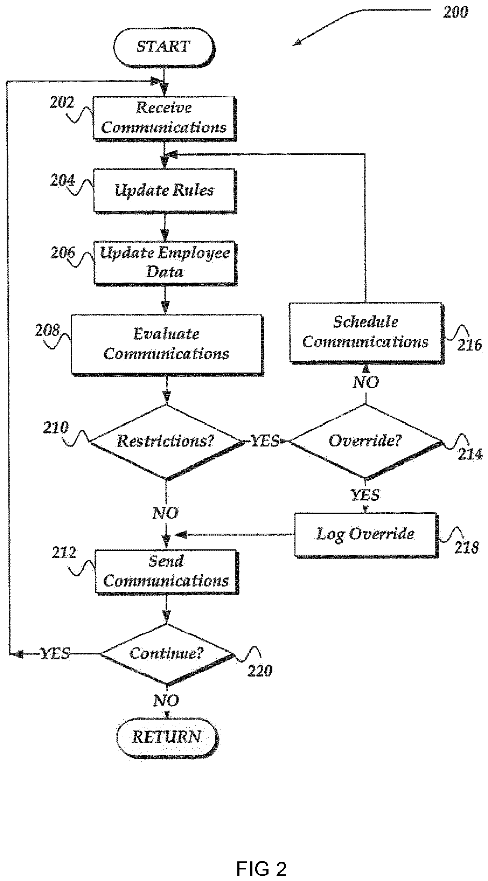

CC device 120 includes virtually any network computing device that is configured to integrate communication mechanisms of a business with components having knowledge about an employee's work schedule and geo-location, with a set of rules that are used to selectively store and/or forward work related communications to an employee, as described in more detail below in conjunction with FIG. 2.

Devices that may operate as CC device 120 include, but are not limited to specially configured personal computers, desktop computers, multiprocessor systems, microprocessor-based or special purpose programmable consumer electronics, network PCs, servers, network appliances, and so forth.

Although CC device 120 is illustrated as a distinct network device, the embodiments are not so limited. For example, a plurality of network devices may be configured to perform the operational aspects of CC device 120. For example, data collection might be performed by one or more network devices, while rescheduling and/or transmission of communications might be provided by one or more other network devices.

CC device 120 may include many more components than those shown. The components shown, however, are sufficient to disclose an illustrative embodiment for practicing the invention.

In any event, as shown, CC device 120 includes one or more processors 108, sometimes referred to as central processing units (CPU). CC device 120 also includes memory components that are in communication with processors 108 and forwarding engine 107. The memory components may generally include Random Access Memory (RAM), Read Only Memory (ROM), and one or more permanent (non-transitory) mass storage devices, including, but not limited to hard disk drives, tape drives, optical drives, floppy disk drives, and so forth. The memory components are arranged to store an operating system for controlling the operation of CC device 120.

The memory components may also include other physical devices including computer readable storage devices that may include volatile, nonvolatile, removable, and non-removable devices configured for storage of information, such as computer readable instructions, data structures, program modules, or other data. Examples of such non-transitory computer storage media include RAM, ROM, EEPROM, flash memory or other memory technology, CD-ROM, digital versatile disks (DVD) or other optical storage, magnetic cassettes, magnetic tape, magnetic disk storage or other magnetic storage devices, or any other non-transitory, physical devices which can be used to store the desired information and which can be accessed by a computing device.

CC device 120 can communicate with one or more client devices 101-105 over network 111 via a network interface unit that may, in some embodiments, reside within forwarding engine 107. Such network interface unit may be constructed for use with any of a variety of communication protocols, including for example, Transmission Control Protocol (TCP)/Internet Protocol (IP). The network interface unit is sometimes known as a transceiver, transceiving device, or network interface card (NIC).

The memory components may store program code and data. For example, the memory components may be configured to store data stores 106. Data stores 106 include virtually device usable for storing and managing data, no matter how the data is structured and/or formatted. Thus, data stores 106 may include files, folders, documents, applications, databases, spreadsheets, or the like. Data stores 106 may manage information that may include, but is not limited to employee information. Such employee information may include employee profile information, including contact information, information about the employee's client device, a defined work schedule, and any special work constraints that the employee might have. Employee information may also include a geo-location for the employee. Geographic (or geo) location information may be obtained from the employee's client device, from the employee, or through a variety of other approaches.

At least some of the employee information might be obtained from the employee's time management/calendar system, from a Human Resource department, a manager/employer, or even entered by the employee. For example, in some embodiments, the employee might enter information indicating a vacation time, sick leave, or other personal time off event. However, data stores 106 may be specially configured to monitor input to prevent the employee, or others, from generating a work schedule that exploits the employee's off-hours. Thus, for example, the employee might be prevented from configuring a 24/7 work schedule, or the like. Similarly, the employee would be unable to enter a rule, emergency override or the like. In this manner, the innovation described herein provides a benefit by preventing self-exploitation by the employee.

Data stores 106 may also include one or more rules that may include a variety of restrictions associated with a work schedule for the employee, as well as any overrides to these restrictions. In some instances, such restrictions may be imposed by the employer, while others might be imposed by a governmental agency, a health agency, or the like. Such rules (and/or employee information) may also be obtained through a time management component and/or a calendaring component within forwarding engine 107, or within another component of CC device 120, or even within another network device.

Data stores 106 may also be configured to receive and selectively store one or more communications that are directed to one or more employees. Along with the communications might also be information indicating a source of the communication, a destination of the communication, and so forth. Data stores 106 may also store one or more data logs that are configured to record information about one or more override restrictions, including a source of the override, when the override restriction is applied, as well as a frequency of use of the override restriction.

Forwarding engine 107 is configured to receive information about a communications, and integrate time management components, calendar components, and information from data stores 106 having knowledge of an employee's work schedule and geo-location, with the set of rules, including any override restrictions. Forwarding engine 107 may then selectively have stored and/or forwarded the received work related communications to the employee based on evaluations of the employee information, rules, and overrides. Forwarding engine 107 may employ a process such as described further below in conjunction with FIG. 2 to perform such actions.

Forwarding engine 107 may also include one or more messaging components that are configured and arranged to receive a communication and to forward the communication to another computing device, and/or to data stores 106. In some embodiments, forwarding engine 107 may include a message transfer manager to provide a communication, using any of a variety of messaging protocols, including but not limited to telephone, digital voice, text, email, or the like.

CC device 120 may further include trusted clock 109 that is configured to be tamper resistant at least. That is, in some configurations, trusted clock 109 is implemented such that a time signal emitted can not be modified or otherwise tampered with by an unauthorized entity, such as an employee or an employer. As such, trusted clock 109 may be employed by time management/calendaring components, as well as other components of CC device 120 for trusted time information. It should be noted that while trusted clock 109 is shown as within CC device 120 and distinct from forwarding engine 107, in other embodiments, trusted clock 109 may reside within forwarding engine 107, or even be external to CC device 120. Thus, embodiments are not constrained to a particular location of trusted clock 109.

### Generalized Operation

The operation of certain additional general aspects of the subject innovation will now be described with respect to FIGURE 2. Actions described in these figures may be performed by one or more components within CC device 120 of FIG. 1, or even a combination of network devices.

Process 200 of FIG. 2 begins, after a start block, at block 202 where a communications is received that is directed to a recipient. As noted above, the communication may be from an employer and is directed to an employee. Generally, however, the communication is from a sender to a recipient. Further, as discussed above, the communications may be of virtually any form or format, including, for example, a phone call, voice message, text message, chat message, or the like.

Processing next flows to block 204, where the communication rules are updated that are associated with when to send a communications, when the communication should be held, and any other restrictions that might affect the communications. The updates may further include any overrides to the restrictions, including, for example, any emergency overrides, or so forth.

Process 200 then continues to block 206, where data about the (recipients) employee(s) are received and updated. As discussed above, such updates to the rules and/or the employee data may be stored in the data stores discussed above in conjunction with FIG. 1. Further, such employee data may include such information as the employee's/recipient's work schedule, as well as their current location. By using the current location of the employee in conjunction with a time management/calendar system(s), a time zone can be determined in which the employee is currently residing, and thereby whether the employee is currently off-hours or on-hours with respect to their work schedule.

It is noted that while process 200 illustrates block 202, 204, and 206 as sequentially executed, this need not be the case. For example, two or more of these blocks may be performed in parallel. Further, blocks 204 and/or 206 may be performed prior to receiving of the communications at block 202.

In any event, processing flows next to block 208, where the communication is evaluated using the updated rules and employee data, including the employee's work schedule and location to determine whether at least one restriction exists that indicates that the communication is to be constrained from being delivered to the recipient/employee during off-hours to the employee's work schedule. Flowing to decision block 210, a determination is made whether there are restrictions based, in part, on the employee's work schedule that indicates that the communication is not to be delivered at this time. If restrictions are detected, processing flows to decision block 214; otherwise, processing flows to block 212.

At block 212, the communication is sent to the employee. Processing then moves to decision block 220, where a determination is made whether to continue to monitor for communications. If so, then processing returns to block 202; otherwise, process 200 may return to a calling process.

At decision block 214, a determination is made whether there are any overrides to the restrictions detected at decision block 210. If an override is detected that indicates that the communication should be sent to the employee, then processing moves to block 218; otherwise, processing flows to block 216.

At block 216, the received communications may be rescheduled to be sent to the employee at a later time. Thus, the work related communications can be restricted to being sent to the employee to within their on-hours for their work schedule; therefore, preventing exploitation of the employee's off-hours, while still allowing the employer to create and send communications without having to be aware of the employee's work schedule. It is noted that in one or more actions performed within process 200 that employs time, such time comparisons, and/or other actions may be verified using the trusted clock 109 discussed above in conjunction with FIG. 1.

It is noted, that where the communications is, for example, a current phone call, the sender/employer could be directed to record a message, which would then be scheduled based on the restrictions. Further, in some embodiments, the sender/employer of the communication could, at block 216, receive a message, indicating that their communications is rescheduled for delivery at a later time. Such feedback provides the added benefit to the sender of knowing that the message is delayed, and why. In this manner, the sender need not wonder why the employee has not responded to the message, and thereby may remain respectful of the employee's work/life balance.

Should however, the sender/employer determine that an emergency override is needed, sender/employer could, at block 204, provide an updated override when the communication rules are updated.

At block 218, where an override to the detected restriction is identified, it may be logged, indicating when it was received, why the override is needed, from whom the override is received from, and/or any other information that may be useful to show compliance to company policy, and/or other requirements. Such logs might be sent to various company departments and/or personal, for review for compliance to a business policy, government policy, a law, or the like. Processing next flows from block 218 to block 212, where the communication is then sent.

It will be understood that each block of the flowcharts, and combinations of blocks in the flowcharts, can be implemented by computer program instructions operating with a special purpose device. These program instructions may be provided to a processor to produce a machine, such that the instructions, which execute on the processor, create means for implementing the actions specified in the block or blocks. The computer program instructions may be executed by a processor to cause a series of operational steps to be performed by the processor to produce a computer-implemented process such that the instructions, which execute on the processor to provide steps for implementing the actions specified in the block or blocks. The computer program instructions may also cause at least some of the operational steps shown in the blocks to be performed in parallel. Moreover, some of the steps may also be performed across more than one processor, such as might arise in a multi-processor computer system. In addition, one or more blocks or combinations of blocks in the illustration may also be performed concurrently with other blocks or combinations of blocks, or even in a different sequence than illustrated without departing from the scope of the subject innovation as defined in the appended claims.

Accordingly, blocks of the illustration support combinations of means for performing the specified actions, combinations of steps for performing the specified actions and program instruction means for performing the specified actions. It will also be understood that each block of the illustration, and combinations of blocks in the illustration, can be implemented by special purpose hardware based systems, which perform the specified actions or steps, or combinations of special purpose hardware and computer instructions.

The above specification, examples, and data provide a complete description of the manufacture and use of the composition of the subject innovation. Many embodiments of the subject innovation can be made without departing from the scope of the subject innovation as defined in the claims hereinafter appended.

## Claims

1. A network device (120), comprising:
one or more non-transitory data stores (106) for storing a recipient's work schedule and communication rules; and
one or more processors (108) programmed to perform actions, comprising:
receiving (202) a communication that is directed to a recipient;
using the stored recipient's work schedule and communication rules, determining (210) if a restriction exists indicating that the communication is to be constrained from being sent to the recipient during off-hours of the recipient's work schedule;
when a restriction is determined (210) to sending the communication, further searching the communication rules to determine whether there is an override (214) to the restriction;
when an override to the restriction is determined (214), logging (218) an override event, and sending (212) the communication to the recipient during the recipient's off-hours; and
when an override to the determined restriction is not determined (214) for the communication, scheduling the communication to be sent to the recipient during on-hours for the recipient's work schedule.

2. The network device of claim 1, wherein one or more processors (108) are programmed to, when an override to the determined restriction is not determined (214) for the communication, provide feedback to a sender of the communication indicating that the communication is rescheduled for delivery based on the recipient's work schedule

3. The network device of claim 1, wherein one or more processors (108) are programmed to monitor the recipient's work schedule and communication rules to prevent the recipient from self-exploitation.

4. The network device of claim 1, wherein the one or more processors (108) are programmed to:
when an override to the determined restriction is not determined (214) for the communication, and the communication is a phone call, directing the sender of the communication to record a message.

5. The network device of claim 1, wherein the one or more processors (108) are programmed to employ a trusted clock signal that is tamper resistant to make the determination (210).

6. The network device of claim 1, wherein the one or more processors (108) are programmed to determine a location of the recipient to determine whether the recipient is within a time zone indicating that the recipient is off-hours from the recipient's work schedule.

7. A method, executing within one or more network devices having one or more processors (108), the method comprising:
receiving (202) a communication that is directed to a recipient;
storing a recipient's work schedule and communication rules;
using the stored recipient's work schedule and communication rules, determining (210) if a restriction exists indicating that the communication is to be constrained from being sent to the recipient during off-hours of the recipient's work schedule;
when a restriction is determined (210) to sending the communication, further searching the communication rules to determine whether there is an override (214) to the restriction;
when an override to the restriction is determined, logging an override event, and sending the communication to the recipient during the recipient's off-hours; and
when an override to the determined restriction is not determined (214) for the communication, scheduling the communication to be sent to the recipient during on-hours for the recipient's work schedule.

8. The method of claim 7, further comprising, when an override to the determined restriction is not determined (214) for the communication, providing feedback to a sender of the communication indicating that the communication is rescheduled for delivery based on the recipient's work schedule

9. The method of claim 7, wherein the recipient is prevented from modifying the work schedule or communication rules to allow off-hour communications to be received.

10. The method of claim 7, further comprising:
when an override to the determined restriction is not determined (214) for the communication, and the communication is a phone call, directing the sender of the communication to record a message.

11. The method of claim 7, wherein using the stored recipient's work schedule and communication rules, further comprises employing a trusted clock signal in making the determination.

12. The method of claim 7, wherein using the recipient's work schedule further comprises determining a location of the recipient to determine whether the recipient is on-hours or off-hours from the work schedule.

13. The method of claim 7, further comprising: evaluating the logged override event for compliance to one of a business policy, government rule, or a law.

## Patentansprüche

1. Netzwerkvorrichtung (120), umfassend:
einen oder mehrere nichtflüchtige Datenspeicher (106), um einen Arbeitszeitplan und Kommunikationsregeln eines Empfängers zu speichern; und
einen oder mehrere Prozessoren (108), die so programmiert sind, dass sie Aktionen durchführen, welche umfassen:
Empfangen (202) einer Kommunikation, die an einen Empfänger gerichtet ist;
Bestimmen (210), unter Verwendung des gespeicherten Arbeitszeitplans und der Kommunikationsregeln des Empfängers, ob eine Beschränkung existiert, die anzeigt, dass die Kommunikation außerhalb der Arbeitszeiten im Arbeitszeitplan des Empfängers nicht an den Empfänger gesendet werden darf;
wenn eine Beschränkung für das Senden der Kommunikation bestimmt wird (210), weiter Durchsuchen der Kommunikationsregeln, um zu bestimmen, ob es eine Aufhebung (214) der Beschränkung gibt;
wenn eine Aufhebung der Beschränkung bestimmt wird (214), Protokollieren (218) eines Aufhebungsereignisses, und Senden (212) der Kommunikation außerhalb der Arbeitszeiten des Empfängers an den Empfänger; und
wenn keine Aufhebung der bestimmten Beschränkung für die Kommunikation bestimmt wird (214), Planen der Kommunikation so, dass sie während Arbeitszeiten im Arbeitszeitplan des Empfängers an den Empfänger gesendet wird.

2. Netzwerkvorrichtung nach Anspruch 1, wobei ein oder mehrere Prozessoren (108) so programmiert sind, dass sie, wenn keine Aufhebung der bestimmten Beschränkung für die Kommunikation bestimmt wird (214), einem Absender der Kommunikation eine Rückmeldung liefern, die anzeigt, dass die Zustellung der Kommunikation auf Basis des Arbeitszeitplans des Empfängers verschoben wurde.

3. Netzwerkvorrichtung nach Anspruch 1, wobei ein oder mehrere Prozessoren (108) so programmiert sind, dass sie den Arbeitszeitplan und die Kommunikationsregeln des Empfängers überwachen, um Selbstausbeutung des Empfängers zu verhindern.

4. Netzwerkvorrichtung nach Anspruch 1, wobei der eine oder die mehreren Prozessoren (108) so programmiert sind, dass sie: wenn keine Aufhebung der bestimmten Beschränkung für die Kommunikation bestimmt wird (214) und es sich bei der Kommunikation um einen Telefonanruf handelt, den Absender der Kommunikation weiterleiten, um eine Nachricht aufzuzeichnen.

5. Netzwerkvorrichtung nach Anspruch 1, wobei der eine oder die mehreren Prozessoren (108) so programmiert sind, dass sie, um die Bestimmung zu treffen (210), ein vertrauenswürdiges Zeitgebersignal nutzen, das manipulationssicher ist.

6. Netzwerkvorrichtung nach Anspruch 1, wobei der eine oder die mehreren Prozessoren (108) so programmiert sind, dass sie einen Aufenthaltsort des Empfängers bestimmen, um zu bestimmen, ob sich der Empfänger in einer Zeitzone aufhält, die anzeigt, dass sich der Empfänger außerhalb der Arbeitszeiten im Arbeitszeitplan des Empfängers befindet.

7. Verfahren, das in einer oder mehreren Netzwerkvorrichtungen mit einem oder mehreren Prozessoren (108) ausgeführt wird, wobei das Verfahren umfasst:
Empfangen (202) einer Kommunikation, die an einen Empfänger gerichtet ist;
Speichern eines Arbeitszeitplans und von Kommunikationsregeln des Empfängers;
Bestimmen (210), unter Verwendung des gespeicherten Arbeitszeitplans und der Kommunikationsregeln des Empfängers, ob eine Beschränkung existiert, die anzeigt, dass die Kommunikation außerhalb der Arbeitszeiten im Arbeitszeitplan des Empfängers nicht an den Empfänger gesendet werden darf;
wenn eine Beschränkung für das Senden der Kommunikation bestimmt wird (210), weiter Durchsuchen der Kommunikationsregeln, um zu bestimmen, ob es eine Aufhebung (214) der Beschränkung gibt;
wenn eine Aufhebung der Beschränkung bestimmt wird, Protokollieren eines Aufhebungsereignisses, und Senden der Kommunikation außerhalb der Arbeitszeiten des Empfängers an den Empfänger; und
wenn keine Aufhebung der bestimmten Beschränkung für die Kommunikation bestimmt wird (214), Planen der Kommunikation so, dass sie während Arbeitszeiten im Arbeitszeitplan des Empfängers an den Empfänger gesendet wird.

8. Verfahren nach Anspruch 7, weiter umfassend, wenn keine Aufhebung der bestimmten Beschränkung für die Kommunikation bestimmt wird (214), Liefern einer Rückmeldung an einen Absender der Kommunikation, die anzeigt, dass die Zustellung der Kommunikation auf Basis des Arbeitszeitplans des Empfängers verschoben wurde.

9. Verfahren nach Anspruch 7, wobei der Empfänger daran gehindert wird, den Arbeitszeitplan oder Kommunikationsregeln zu ändern, um zu ermöglichen, dass Kommunikationen außerhalb der Arbeitszeiten empfangen werden.

10. Verfahren nach Anspruch 7, weiter umfassend:
wenn keine Aufhebung der bestimmten Beschränkung für die Kommunikation bestimmt wird (214) und es sich bei der Kommunikation um einen Telefonanruf handelt, Weiterleiten des Absenders der Kommunikation, um eine Nachricht aufzuzeichnen.

11. Verfahren nach Anspruch 7, wobei das Verwenden des gespeicherten Arbeitszeitplans und der Kommunikationsregeln des Empfängers weiter das Nutzen eines vertrauenswürdigen Zeitgebersignals beim Treffen der Bestimmung umfasst.

12. Verfahren nach Anspruch 7, wobei das Verwenden des Arbeitszeitplans des Empfängers weiter das Bestimmen eines Aufenthaltsorts des Empfängers umfasst, um zu bestimmen, ob sich der Empfänger inner- oder außerhalb der Arbeitszeiten des Arbeitszeitplans befindet.

13. Verfahren nach Anspruch 7, weiter umfassend: Beurteilen des protokollierten Aufhebungsereignisses auf Einhaltung eines aus einer Geschäftspolitik, einer staatlichen Regelung oder eines Gesetzes.

## Revendications

1. Dispositif de réseau (120), comprenant :
un ou plusieurs magasins de données non transitoires (106) pour stocker un planning de travail et des règles de communication d'un destinataire ; et
un ou plusieurs processeurs (108) programmés pour réaliser des actions, comprenant :
la réception (202) d'une communication qui est dirigée vers un destinataire ;
en utilisant le planning de travail et les règles de communication stockés du destinataire, la détermination (210) s'il existe une restriction indiquant l'interdiction de l'envoi de la communication aux heures creuses du planning de travail du destinataire ;
lorsqu'il est déterminé (210) qu'il existe une restriction interdisant l'envoi de la communication, la recherche approfondie des règles de communication pour déterminer s'il existe une dérogation (214) à la restriction ;
lorsqu'il est déterminé (214) qu'il existe une dérogation à la restriction, la journalisation (218) d'un événement de dérogation, et l'envoi (212) de la communication au destinataire aux heures creuses du destinataire ; et
lorsqu'il n'est pas déterminé (214) qu'il existe une dérogation à la restriction déterminée pour la communication, la planification de l'envoi de la communication aux heures creuses du planning de travail du destinataire.

2. Dispositif de réseau selon la revendication 1, dans lequel les un ou plusieurs processeurs (108) sont programmés pour, lorsqu'il n'est pas déterminé (214) qu'il existe une dérogation à la restriction déterminée pour la communication, fournir une rétroaction à un expéditeur de la communication indiquant que l'envoi de la communication est replanifié sur la base du planning de travail du destinataire.

3. Dispositif de réseau selon la revendication 1, dans lequel les un ou plusieurs processeurs (108) sont programmés pour surveiller le planning de travail et les règles de communication du destinataire pour empêcher toute auto-exploitation du destinataire.

4. Dispositif de réseau selon la revendication 1, dans lequel les un ou plusieurs processeurs (108) sont programmés pour : lorsqu'il n'est pas déterminé (214) qu'il existe une dérogation à la restriction déterminée pour la communication, et la communication est un appel téléphonique, instruire à l'expéditeur de la communication d'enregistrer un message.

5. Dispositif de réseau selon la revendication 1, dans lequel les un ou plusieurs processeurs (108) sont programmés pour employer un signal d'horloge de confiance inviolable pour effectuer la détermination (210).

6. Dispositif de réseau selon la revendication 1, dans lequel les un ou plusieurs processeurs (108) sont programmés pour déterminer un emplacement du destinataire pour déterminer si le destinataire est à l'intérieur d'un fuseau horaire indiquant que le destinataire est aux heures creuses du planning de travail du destinataire.

7. Procédé, s'exécutant à l'intérieur d'un ou plusieurs dispositifs de réseau comportant un ou plusieurs processeurs (108), le procédé comprenant :
la réception (202) d'une communication qui est dirigée vers un destinataire ;
le stockage d'un planning de travail et de règles de communication d'un destinataire ;
en utilisant le planning de travail et les règles de communication stockés du destinataire, la détermination (210) s'il existe une restriction indiquant l'interdiction de l'envoi de la communication aux heures creuses du planning de travail du destinataire ;
lorsqu'il est déterminé (210) qu'il existe une restriction interdisant l'envoi de la communication, la recherche approfondie des règles de communication pour déterminer s'il existe une dérogation (214) à la restriction ;
lorsqu'il est déterminé qu'il existe une dérogation à la restriction, la journalisation d'un événement de dérogation, et l'envoi de la communication au destinataire aux heures creuses du destinataire ; et
lorsqu'il n'est pas déterminé (214) qu'il existe une dérogation à la restriction déterminée pour la communication, la planification de l'envoi de la communication aux heures creuses du planning de travail du destinataire.

8. Procédé selon la revendication 7, comprenant en outre, lorsqu'il n'est pas déterminé (214) qu'il existe une dérogation à la restriction déterminée pour la communication, la fourniture d'une rétroaction à un expéditeur de la communication indiquant que l'envoi de la communication est replanifié sur la base du planning de travail du destinataire.

9. Procédé selon la revendication 7, dans lequel il est interdit au destinataire de modifier le planning de travail ou les règles de communication pour autoriser la réception de communications aux heures creuses.

10. Procédé selon la revendication 7, comprenant en outre :
lorsqu'il n'est pas déterminé (214) qu'il existe une dérogation à la restriction déterminée pour la communication, et la communication est un appel téléphonique, l'instruction à l'expéditeur de la communication d'enregistrer un message.

11. Procédé selon la revendication 7, dans lequel l'utilisation du planning de travail et des règles de communication stockés du destinataire comprend l'emploi d'un signal d'horloge de confiance pour effectuer la détermination.

12. Procédé selon la revendication 7, dans lequel l'utilisation du planning de travail du destinataire comprend en outre la détermination d'un emplacement du destinataire pour déterminer si le destinataire est aux heures d'activité ou aux heures creuses du planning de travail.

13. Procédé selon la revendication 7, comprenant en outre : l'évaluation si l'événement de dérogation journalisé est conforme à l'une parmi une politique d'entreprise, une règle gouvernementale et une législation.
